# EUROPEAN PATENT APPLICATION

(11) **EP 3 578 772 A1**
(43) Date of publication of application: **11.12.2019**
(21) Application number: 18747959.7
(22) Date of filing: 01.02.2018
(51) Int. Cl.: F01N 3/24, F01N 3/08

(54) **EXHAUST PURIFICATION DEVICE**

(30) Priority: 03.02.2017 JP 2017018119
(71) Applicant: Hino Motors, Ltd., Hino-shi, Tokyo 191-8660 (JP)
(72) Inventor: TSURUTA, Tomoyuki, Hino-shi Tokyo 191-8660 (JP); TONGU, Hirofumi, Hino-shi Tokyo 191-8660 (JP); TOBE, Kuniharu, Hino-shi Tokyo 191-8660 (JP)
(74) Representative: Louis Pöhlau Lohrentz
(86) International application number: PCT/JP2018/003487
(87) International publication number: WO 2018/143372

(57) **Abstract**

Provided are gas dispersion portion 7C covering entry end face of selective reduction catalyst 4 (aftertreatment device) and introducing exhaust gas 1 through exhaust feed port 11 from direction substantially perpendicular to axis of aftertreatment device and mixing pipe 7B (exhaust conduit) curved from exhaust feed port 11 in the gas dispersion portion 7C toward exit side of the selective reduction catalyst 4 to extend axially of aftertreatment device. Gas dispersion portion 7C is of crushingly deformed shape to ensure area from exhaust feed port 11 to vicinity of extension of axis of the selective reduction catalyst 4 as fan-likely spreading flow guide space 12, remaining area being flat throttling space 13 close to entry end face of selective reduction catalyst 4. Boundary between throttling and flow guide spaces 13 and 12 in crushing deformed shape is formed as arc-like taper slope 14.

## Description

### Technical Field

The present invention relates to an exhaust emission control device.

### Background Art

It has been recently proposed that a particulate filter for capturing particulates in exhaust gas is incorporated in an exhaust pipe and a selective reduction catalyst capable of selectively reacting NOₓ with ammonia even in the presence of oxygen is arranged downstream of the particulate filter, urea water as reducing agent being added at a position between the selective reduction catalyst and the particulate filter, thereby attaining lessening of both the particulates and NOₓ.

Such addition of the urea water to the selective reduction catalyst is conducted at the position between the particulate filter and the selective reduction catalyst. Thus, in order to ensure sufficient reaction time for pyrolysis of the urea water added to the exhaust gas into ammonia and carbon dioxide gas, it is necessary to prolong a distance between the urea-water added position and the selective reduction catalyst. However, arrangement of the particulate filter and the selective reduction catalyst in a substantially spaced apart relationship will extremely impair the mountability on a vehicle.

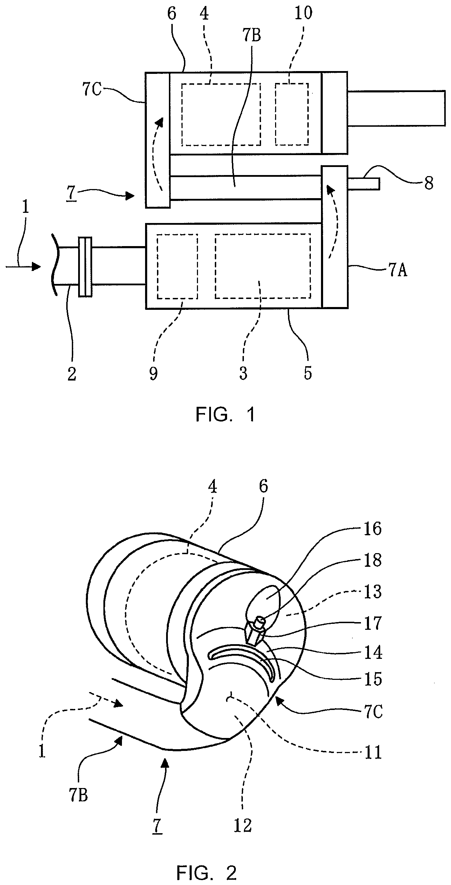

In order to overcome this, an exhaust emission control device compact in size as shown in Fig. 1 has been proposed. In such exhaust emission control device, incorporated in an exhaust pipe 2 through which exhaust gas 1 flows from an engine is a particulate filter 3 housed in a casing 5 to capture particles in the exhaust gas 1; arranged downstream of and in parallel with the particulate filter 3 and housed in a casing 6 is a selective reduction catalyst 4 having a property capable of selectively reacting NOₓ with ammonia even in the presence of oxygen. An exit end of the particulate filter 3 is connected to an entry end of the selective reduction catalyst 4 through an S-shaped communication passage 7 such that the exhaust gas 1 discharged from the exit end of the particulate filter 3 is reversely curved back into the entry end of the adjacent selective reduction catalyst 4 .

The communication passage 7 is the S-shaped structure comprising a gas gathering portion 7A which covers the exit end of the particulate filter 3 to gather the exhaust gas 1 just discharged from the exit end of the particulate filter 3 through substantially perpendicular turnabout of the gas, a mixing pipe 7B which extracts the gathered exhaust gas 1 from the gathering portion 7A in a direction reverse to the exhaust flow in the particulate filter 3 and a gas dispersing portion 7C which covers the entry end of the selective reduction catalyst 4 to disperse the gas 1 guided by the mixing pipe 7B through substantially perpendicular turnabout of the gas into the entry end of the selective reduction catalyst 4. The entry end of the mixing pipe 7B is centrally provided with an injector 8 for addition of the urea water into the mixing pipe 7B and directed to the exit end of the mixing pipe 7B.

In the example illustrated, arranged in the casing 5 and in front of the particulate filter 3 is an oxidation catalyst 9 for oxidization treatment of the exhaust gas 1, and arranged in the casing 6 and behind the selective reduction catalyst 4 is an ammonia lessening catalyst 10 for oxidization treatment of surplus ammonia.

With such construction being employed, the particulates in the exhaust gas 1 are captured by the particulate filter 3. The urea water is added downstream of the filter and intermediately of the mixing pipe 7B into the exhaust gas 1 by the injector 8 and is pyrolyzed into ammonia and carbon dioxide gas, so that NOₓ in the exhaust gas 1 is favorably reduced and depurated by the ammonia on the selective reduction catalyst 4. As a result, both the particulates and NOₓ in the exhaust gas 1 are lessened.

In this case, the exhaust gas 1 discharged from the exit end of the particulate filter 3 is reversely curved back by the communication passage 7 into the entry end of the adjacent selective reduction catalyst 4 so that a long distance is ensured between the urea-water added position intermediately of the communication passage 9 and the selective reduction catalyst 4 to ensure enough reaction time for production of ammonia from the urea water.

Moreover, the particulate filter 3 is arranged in parallel with the selective reduction catalyst 4 and the communication passage 7 is arranged between and along the particulate filter 3 and selective reduction catalyst 4 so that the whole structure becomes compact in size to substantially enhance its mountability on a vehicle.

As a prior art literature pertinent to this kind of exhaust emission control device, there already exists, for example, the following Patent Literature 1.

### Citation List

### Patent Literature

Patent Literature 1: JP 2008-196328A

### Summary of Invention

### Technical Problems

However, in such turnabout introduction of the exhaust gas 1 into the selective reduction catalyst 4, the exhaust gas 1 tends to flow biasedly to outward of the curved direction upon the turnabout of the exhaust gas 1, which may lead to non-uniform introduction of the exhaust gas 1 into the selective reduction catalyst 4 and resultant insufficient derivation of catalytic performance to be inherently exerted.

It has been also proposed as an improved measure that the gas dispersion portion 7C has a depression in a position opposite to an introduction side of the exhaust gas 1 and directed toward an entry end face of the selective reduction catalyst 4 to suppress the flow of the exhaust gas 1. Nevertheless, it is a fact that any depression shapes proposed up to the present may correct longitudinal bias in flow along the introduced direction of the exhaust gas 1 into the gas dispersion portion 7C, but cannot concurrently contribute to improved dispersion in a lateral direction (direction substantially parallel to the entry end face of the selective reduction catalyst 4 and substantially perpendicular to the introduced direction of the exhaust gas 1).

The invention was made in view of the above. Upon turnabout introduction of exhaust gas into a selective reduction catalyst or other aftertreatment device, the invention has its object to correct more effectively than ever before a tendency of the exhaust gas flowing biasedly and relatively much to outward of a curved direction to thereby attain improvement in catalytic performance.

### Solution to Problems

The invention is directed to an exhaust emission control device with an exhaust system including an aftertreatment device for purifying exhaust gas passing therethrough and with an adopted layout for turnabout introduction of the exhaust gas into said aftertreatment device, characterized in that it comprises a gas dispersion portion for covering an entry end face of said aftertreatment device and for introducing the exhaust gas thereinto through an exhaust feed port from a direction substantially perpendicular to an axis of said aftertreatment device and an exhaust conduit curved from the exhaust feed port in said gas dispersion portion toward an exit side of said aftertreatment device to extend axially of said aftertreatment device, said gas dispersion portion being of a crushingly deformed shape to ensure an area from said exhaust feed port in said gas dispersion portion to a vicinity of an extension of the axis of said aftertreatment device as a fan-likely spreading flow guide space, a remaining area being a flat throttling space close to the entry end face of said aftertreatment device, a boundary between said throttling and flow guide spaces in the crushingly deformed shape being formed as an arc-like taper slope.

In this way, the exhaust gas guided through the exhaust conduit is changed in direction into the direction substantially perpendicular to the axis of the aftertreatment device and is introduced into the exhaust feed port. Thus, during its flowing from said exhaust feed port through the fan-likely spreading flow guide space, dispersibility in the lateral direction (direction substantially parallel to the entry end face of the aftertreatment device and substantially perpendicular to the introduced direction of the exhaust gas into the exhaust feed port) is enhanced while the flow of the exhaust gas is uniformly suppressed by the arc-shaped taper slope. As a result, the tendency of the exhaust gas flowing biasedly and relatively much to outward of the curved direction is effectively corrected without causing lateral bias.

Further, it is preferable in the invention that a step is formed midway on a gradient of the taper slope, said step being arcuate concentrically of an arc shape of said taper slope and projecting toward the entry end face of the aftertreatment device. Then, when the exhaust gas contains an additive having greater specific gravity than the exhaust gas, the additive flowing along an inner wall surface of the flow passage outward of the curved direction by a centrifugal force is caused to run onto said step, whereby the additive is broken away from the inner wall surface of the flow passage and is diffused toward the entry end face of the aftertreatment device. Thus, the additive whose bias has been difficult to be corrected can be substantially improved in dispersibility.

Further, it is preferable in the invention that the exhaust conduit has a flow passage cross section upstream of the exhaust feed port in the form of a rhombus with one of diagonals thereof being aligned with the curved direction of said exhaust conduit. Then, the flow of the exhaust gas upstream of the exhaust feed port can be guided centrally of the exhaust conduit and be persuaded to form a main flow substantially centrally of the exhaust conduit to thereby further suppress generation of lateral bias upon the turnabout of the flow.

Further, it is preferable in the invention that a guide depression is formed on the gas dispersion portion, said guide depression projecting into the throttling space in position corresponding to a bisectrix of a fan shape of the flow guide space to suppress and direct the main flow of the exhaust gas centrally of the entry end face of the aftertreatment device. Then, when the flow rate of the exhaust gas is lowered, the main flow of the exhaust gas is effectively suppressed and guided centrally of the entry end face of aftertreatment device by said guide depression.

Further, it is preferable in the invention that a sensor boss is formed on the bisectrix of the fan shape of the flow guide space between the guide depression and the taper slope. Then, the sensor boss can be utilized to position the sensor, which contributes to direct detection of temperature or other various information on the main flow of the exhaust gas.

### Advantageous Effects of Invention

The above-mentioned exhaust emission control device according to the invention can exhibit various excellent effects as mentioned in the below.
(I) Upon turnabout introduction of the exhaust gas into the aftertreatment device, the tendency of the exhaust gas flowing relatively much and to outward of the curved direction can be effectively corrected to an extent unattainable ever before, so that a full volume of the aftertreatment device can be effectively utilized to sufficiently derive the catalytic performance to be inherently exhibited.
(II) When employed is the construction that the step is formed midway on the gradient of the taper slope, is arcuate concentrically of an arc shape of said taper slope and projects toward the entry end face of the aftertreatment device, even if the exhaust gas contains the additive having greater specific gravity than the exhaust gas, the additive flowing along the inner wall surface of the flow passage outward of the curved direction by the centrifugal force can be caused to run onto the step, whereby the additive is broken away from the inner wall surface of the flow passage and is diffused toward the entry end face of the aftertreatment device. Thus, the dispersibility of the additive contained in the exhaust gas can be substantially improved to further effectively derive the catalytic performance of the aftertreatment device.
(III) When employed is the construction that the exhaust conduit has the flow passage cross section upstream of the exhaust feed port in the form of the rhombus with one of the diagonals thereof being aligned with the curved direction of said exhaust conduit, the formation of the flow passage cross section upstream of the exhaust feed port in the exhaust conduit in the form of the rhombus guides the flow of the exhaust gas upstream of the exhaust feed port centrally of the exhaust conduit to persuade formation of the main flow thereof substantially centrally of the exhaust conduit, thereby further suppressing generation of lateral bias upon turnabout of the flow, leading to further effective derivation of the catalytic performance of the aftertreatment device.
(IV) When employed is the construction that the guide depression is formed on the gas dispersion portion and projects into the throttling space in position corresponding to the bisectrix of the fan-shape of the flow guide space to suppress and direct the main flow of the exhaust gas centrally of the entry end face of the aftertreatment device, even if the flow rate of the exhaust gas is lowered to lower the suppressive effect of the taper slope, the main flow of the exhaust gas can be effectively suppressed by the guide depression to guide the same centrally of the entry end face of the aftertreatment device to thereby compensate lowering of the catalytic performance due to lowering in flow rate of the exhaust gas.
(V) When employed is the construction that the sensor boss is formed on the bisectrix of the fan shape of the flow guide space between the guide depression and the taper slope, the sensor boss can be utilized to position the sensor, which contributes to direct detection of temperature or other various information on the main flow of the exhaust gas, leading to substantial enhancement of the detection accuracy and realization of easily arranging the sensor in position.

### Brief Description of Drawings

Fig. 1 is a schematic diagram showing an example of a conventional exhaust emission control device;
Fig. 2 is a perspective view showing an embodiment of the invention;
Fig. 3 is a front view of a gas dispersion portion shown in Fig. 2;
Fig. 4 is a view looking in a direction of arrows IV in Fig. 3;
Fig. 5 is a sectional view looking in a direction of arrows V in Fig. 4; and
Fig. 6 is a sectional view of the gas dispersion portion shown in Fig. 4.

### Description of Embodiment

An embodiment of the invention will be described in conjunction with the drawings.

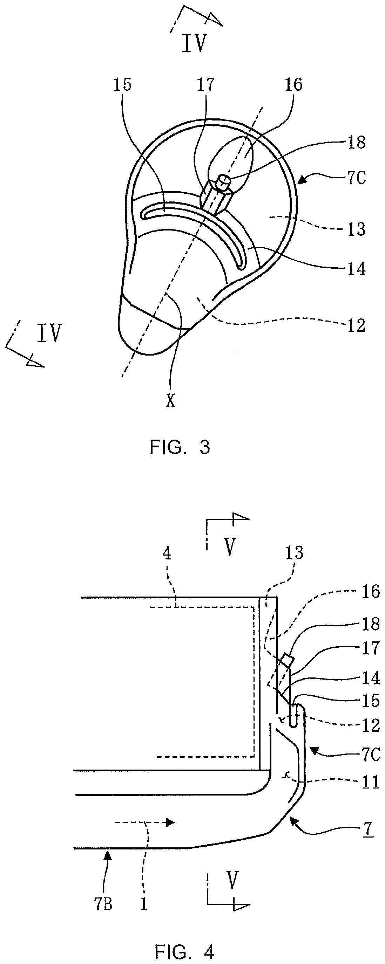

Figs. 2-6 show the embodiment of the invention. In the embodiment relating to an exhaust emission control device constructed similar to that explained in the above with respect to Fig. 1, a gas dispersion portion 7C providing a downstream portion of the communication passage 7 is constructed such that it covers an entry end face of a selective reduction catalyst 4 as aftertreatment device and that the exhaust gas 1 is introduced through an exhaust feed port 11 from a direction substantially perpendicular to an axis of the catalyst 4 (see Fig. 4). A mixing pipe 7B guiding the exhaust gas 1 into the exhaust feed port 11 of the gas dispersion portion 7C provides an exhaust conduit curved from the exhaust feed port 11 toward an exit side of the selection reduction catalyst 4 to extend axially of the selection reduction catalyst 4. The gas dispersion portion 7C is of a crushingly deformed shape to ensure an area extending from the exhaust feed port 11 to a vicinity of an extension of the axis of the selective reduction catalyst 4 in the gas dispersion portion 7C as a fan-likely spreading flow guide space 12, a remaining area being a flat throttling space 13 close to the entry end face of the selective reduction catalyst 4, a boundary between the throttling and flow guide spaces 13 and 12 in the crushingly deformed shape being formed as an arc-like taper slope 14.

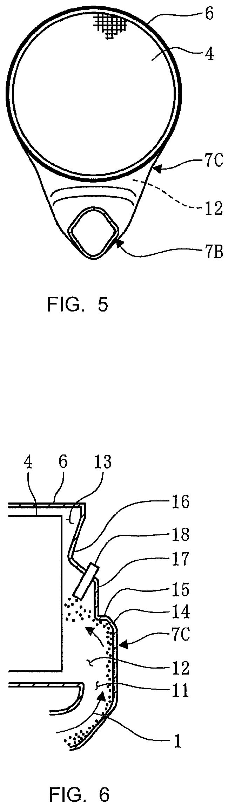

Especially in the embodiment, formed midway on a gradient of the taper slope 14 is a step 15 which is arcuate concentrically of an arc shape of the taper slope 14 and projects or jetties toward the entry end face of the selective reduction catalyst 4; and the mixing pipe 7B has a flow passage cross section upstream of the exhaust feed port 11 in the form of a rhombus with one of diagonals thereof being aligned with the curved direction of the mixing pipe 7B (see Fig. 5).

Formed on the gas dispersion portion 7C is a guide depression 16 which projects into the throttling space 13 in position corresponding to a bisectrix X of the fan shape of the flow guide space 12 (see Fig. 3) to suppress and direct a main flow of the exhaust gas 1 centrally of the entry end face of the selective reduction catalyst 4. Formed on the bisectrix X (see Fig. 3) of the fan shape of the flow guide space 12 and between the guide depression 16 and the taper slope 14 is a sensor boss 17 into which a sensor 18 is fitted to detect a temperature of the exhaust gas 1.

In this way, the exhaust gas 1 guided through the mixing pipe 7B is changed in direction into the direction substantially perpendicular to the axis of the selective reduction catalyst 4 and is introduced into the exhaust feed port 11. While flowing from the exhaust feed port 11 into the flow guide space 12 widened fan-likely, the exhaust gas 1 is enhanced in dispersibility in the lateral direction (direction substantially parallel to the entry end face of the selective reduction catalyst 4 and substantially perpendicular to the introduction direction of the exhaust gas 1) and is evenly suppressed in flow by the arc-shaped taper slope 14. Thus, the tendency of the exhaust gas 1 flowing biasedly and relatively much to outward of the curved direction is corrected effectively without causing any lateral bias.

In a case of an exhaust emission control device having, as the aftertreatment device, the selective reduction catalyst 4 as disclosed in the embodiment, the exhaust gas 1 contains misty urea water (additive) added upstream. The misty urea water, which has greater specific gravity than the exhaust gas 1, tends to be prominently biased to outward of the curved direction. However, the formation, midway on the gradient of the taper slope 14, of the step 15 which is arcuate concentrically of the arc shape of the taper slope 14 and projects or jetties toward the entry end face of the selective reduction catalyst 4 causes the misty urea water flowing along an inner wall surface of the flow passage outward of the curved direction by a centrifugal force to run onto the step 15, whereby the misty urea water is broken away from the inner wall surface of the flow passage and is diffused toward the entry end face of the selective reduction catalyst 4. Thus, the misty urea water whose bias has been difficult to be corrected can be substantially enhanced in dispersibility.

Thus, according to the above-mentioned embodiment, upon turnabout introduction of the exhaust gas 1 into the selective reduction catalyst 4, the tendency of the exhaust gas 1 flowing relatively much to outward of the curved direction thereof can be effectively corrected to an extent unattainable ever before, so that a full volume of the selective reduction catalyst 4 can be effectively utilized to sufficiently derive the catalytic performance to be inherently exhibited. Even if the misty urea water, which has greater specific gravity than the exhaust gas 1, is contained in the exhaust gas 1, the misty urea water flowing along the inner wall surface of the flow passage outward of the curved direction by the centrifugal force is caused to run onto the step 15 so that the misty urea water can be broken away from the inner wall surface of the flow passage and be diffused toward the entry end face of the selective reduction catalyst 4. Thus, the dispersibility of the misty urea water contained in the exhaust gas 1 can be also substantially enhanced, leading to further effective derivation of the catalytic performance of the selective reduction catalyst 4.

Further, in the embodiment, the mixing pipe 7B has the flow passage cross section upstream of the exhaust feed port 11 in the form of the rhombus with one of the diagonals thereof being aligned with the curved direction of the mixing pipe 7B. Thus, the flow of the exhaust gas 1 upstream of the exhaust feed port 11 can be guided centrally of the mixing pipe 7B and persuaded to form a main flow substantially centrally thereof to thereby further suppress generation of lateral bias upon turnabout of the flow, leading to further effective deviation of the catalytic performance of the selective reduction catalyst 4.

Moreover, the guide depression 16 is formed in the gas dispersion portion 7C, so that, even if the flow rate of the exhaust gas 1 is lowered to lower the suppressive effect of the taper slope 14, the main flow of the exhaust gas 1 can be effectively suppressed by the guide depression 16 to guide the same centrally of the entry end face of the selective reduction catalyst 4 to thereby compensate lowering of the catalytic performance due to lowering in flow rate of the exhaust gas 1.

Further, in the embodiment, the sensor boss 17 is formed on the bisectrix of the fan shape of the flow guide space 12 between the guide depression 16 and the taper slope 14 so that the sensor boss 17 can be utilized to position the sensor 18, which contributes to direct detection of the temperature of the main flow of the exhaust gas 1, leading to substantial enhancement of the detection accuracy and realization of easily arranging the sensor 18 in position.

It is to be understood that an exhaust emission control device according to the invention is not limited to the above embodiment and that various changes and modifications may be made without departing from the scope of the invention. For example, though the embodiment illustrated is application to an entry side of a selective reduction catalyst in an arrangement thereof in parallel with a particulate filter, the invention may be similarly applied to any aftertreatment device other than the selective reduction catalyst; alternatively, the invention may be applied to a variety of types of exhaust emission control devices with adopted layout of turnabout introduction of exhaust gas into an aftertreatment device.

### Reference Signs List

- 1: exhaust gas
- 4: selective reduction catalyst (aftertreatment device)
- 7B: mixing pipe (exhaust conduit)
- 7C: gas dispersion portion
- 11: exhaust feed port
- 12: flow guide space
- 13: throttling space
- 14: taper slope
- 15: step
- 16: guide depression
- 17: sensor boss

## Claims

1. An exhaust emission control device with an exhaust system including an aftertreatment device (4) for purifying exhaust gas (1) passing therethrough and with an adopted layout for turnabout introduction of the exhaust gas (1) into said aftertreatment device (4), **characterized in that** it comprises a gas dispersion portion (7C) for covering an entry end face of said aftertreatment device (4) and for introducing the exhaust gas (1) thereinto through an exhaust feed port (11) from a direction substantially perpendicular to an axis of said aftertreatment device (4) and an exhaust conduit (7B) curved from the exhaust feed port (11) in said gas dispersion portion (7C) toward an exit side of said aftertreatment device (4) to extend axially of said aftertreatment device (4), said gas dispersion portion (7C) being of a crushingly deformed shape to ensure an area from said exhaust feed port (11) in said gas dispersion portion (7C) to a vicinity of an extension of the axis of said aftertreatment device (4) as a fan-likely spreading flow guide space (12), a remaining area being a flat throttling space (13) close to the entry end face of said aftertreatment device (4), a boundary between said throttling and flow guide spaces (12 and 13) in the crushingly deformed shape being formed as an arc-like taper slope (14).

2. The exhaust emission control device as claimed in claim 1, wherein a step (15) is formed midway on a gradient of the taper slope (14), the step (15) being arcuate concentrically of an arc shape of said taper slope (14) and projecting toward the entry end face of the aftertreatment device (4).

3. The exhaust emission control device as claimed in claim 1, wherein the exhaust conduit (7B) has a flow passage cross section upstream of the exhaust feed port (11) in the form of a rhombus with one of diagonals thereof being aligned with the curved direction of said exhaust conduit (7B).

4. The exhaust emission control device as claimed in claim 2, wherein the exhaust conduit (7B) has a flow passage cross section upstream of the exhaust feed port (11) in the form of a rhombus with one of diagonals thereof being aligned with the curved direction of said exhaust conduit (7B).

5. The exhaust emission control device as claimed in claim 1, wherein a guide depression (16) is formed on the gas dispersion portion (7C), said guide depression (16) projecting into the throttling space (13) in position corresponding to a bisectrix of a fan shape of the flow guide space (12) to suppress and direct a main flow of the exhaust gas (1) centrally of the entry end face of the aftertreatment device (4).

6. The exhaust emission control device as claimed in claim 2, wherein a guide depression (16) is formed on the gas dispersion portion (7C), said guide depression (16) projecting into the throttling space (13) in position corresponding to a bisectrix of a fan shape of the flow guide space (12) to suppress and direct a main flow of the exhaust gas (1) centrally of the entry end face of the aftertreatment device (4).

7. The exhaust emission control device as claimed in claim 3, wherein a guide depression (16) is formed on the gas dispersion portion (7C), said guide depression (16) projecting into the throttling space (13) in position corresponding to a bisectrix of a fan-shape of the flow guide space (12) to suppress and direct a main flow of the exhaust gas (1) centrally of the entry end face of the aftertreatment device (4).

8. The exhaust emission control device as claimed in claim 4, wherein a guide depression (16) is formed on the gas dispersion portion (7C), said guide depression (16) projecting into the throttling space (13) in position corresponding to a bisectrix of a fan-shape of the flow guide space (12) to suppress and direct a main flow of the exhaust gas (1) centrally of the entry end face of the aftertreatment device (4).

9. The exhaust emission control device as claimed in claim 5, wherein a sensor boss (17) is formed on the bisectrix of the fan shape of the flow guide space (12) between the guide depression (16) and the taper slope (14).

10. The exhaust emission control device as claimed in claim 6, wherein a sensor boss (17) is formed on the bisectrix of the fan shape of the flow guide space (12) between the guide depression (16) and the taper slope (14).

11. The exhaust emission control device as claimed in claim 7, wherein a sensor boss (17) is formed on the bisectrix of the fan shape of the flow guide space (12) between the guide depression (16) and the taper slope (14).

12. The exhaust emission control device as claimed in claim 8, wherein a sensor boss (17) is formed on the bisectrix of the fan-shaped flow guide space (12) between the guide depression (16) and the taper slope (14).
